(19) Europäisches Patentamt / European Patent Office / Office européen des brevets

(11) **EP 4 340 078 A1**

(12) **EUROPEAN PATENT APPLICATION**
published in accordance with Art. 153(4) EPC

(43) Date of publication:
**20.03.2024 Bulletin 2024/12**

(21) Application number: **22806491.1**

(22) Date of filing: **25.04.2022**

(51) International Patent Classification (IPC):
$H01M\ 8/04223^{(2016.01)}$  $H01M\ 8/04225^{(2016.01)}$
$H01M\ 8/04302^{(2016.01)}$  $H01M\ 8/04313^{(2016.01)}$

(52) Cooperative Patent Classification (CPC):
Y02E 60/50

(86) International application number:
**PCT/CN2022/089123**

(87) International publication number:
**WO 2022/237522 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.05.2021 CN 202110524604**

(71) Applicant: **Shanghai Hydrogen Propulsion Technology Co., Ltd.**
**Shanghai 201804 (CN)**

(72) Inventors:
• **WANG, Renfang**
**Shanghai 201804 (CN)**
• **HUO, Sen**
**Shanghai 201804 (CN)**
• **HOU, Zhongjun**
**Shanghai 201804 (CN)**
• **SHI, Weiyu**
**Shanghai 201804 (CN)**
• **MO, Zheyang**
**Shanghai 201804 (CN)**

(74) Representative: **advotec.**
**Patent- und Rechtsanwaltspartnerschaft**
**Tappe mbB**
**Widenmayerstraße 4**
**80538 München (DE)**

(54) **LOW-TEMPERATURE STARTUP CONTROL METHOD FOR FUEL CELL**

(57) The present disclosure provides a low-temperature startup control method for a fuel cell, comprising: obtaining time $\tau_T(t)$ required to raise the temperature of the fuel cell from a current temperature to a freezing point temperature in the fuel cell at a current heating rate at moment t during the low-temperature startup of the fuel cell; obtaining time formula (I) required to continuously freeze the interior of the fuel cell from a current ice volume fraction to an allowed ice volume fraction upper limit at a current freezing rate at the moment t; obtaining a fuel cell low-temperature start capability index $SF_0(t)$ according to the ratio of $\tau_T(t)$ to formula (I); and when $SF_0(t) > 1$, increasing the heating rate by adjusting a control policy, thereby ensuring successful low-temperature startup of the fuel cell.

EP 4 340 078 A1

obtaining a time period $\tau_T(t)$ required for heating the fuel cell from a present temperature $T(t)$ to a freezing point temperature $T_{fusion}$ in an interior of the fuel cell with a present heating rate at a moment $t$ in a low-temperature startup process of a proton exchange membrane fuel cell

obtaining a time period $\tau_w^{ab}(t) + \tau_w^{ice}(t)$ required for continuously freezing the interior of the fuel cell from a present ice volume fraction $S_{ice}(t)$ to an allowed ice volume fraction upper limit $s_{ice}^{limit}$ with a present freezing rate at the moment $t$

obtaining a low-temperature startup capability index $SF_0(t)$ of the fuel cell based on a ratio of $\tau_T(t)$ to $\tau_w^{ab}(t) + \tau_w^{ice}(t)$

increasing the present heating rate by adjusting a control strategy reasonably if $SF_0(t) > 1$, to decrease the time period $\tau_T(t)$ to accelerate a heating process and to obtain $SF_0(t) < 1$, thereby ensuring success of the low-temperature startup of the fuel cell, in which $SF_0(t) > 1$ indicates that a freezing process in the interior of the fuel cell is faster than the heating process at the moment t, which causes failure of the low-temperature startup of the fuel cell in case that the control strategy is not adjusted

FIG. 1

**Description**

**CROSS-REFERENCE TO RELATED APPLICATION**

This disclosure is based on and claims a priority to Chinese Patent Application No. 202110524604.6, filed on May 13, 2021, the entire content of which is incorporated herein by reference.

**TECHNICAL FIELD**

The disclosure relates to a field of application of a proton exchange membrane fuel cell and engineering development technologies, and more particularly to a method for controlling low-temperature startup of a fuel cell.

**BACKGROUND**

A proton exchange membrane fuel cell (PEMFC) is one of clean energy sources with a most significant commercial prospect. Well-known domestic and international car companies and main engine plants of fuel cells have gradually introduced various fuel cell products for passenger cars and commercial vehicles. The proton exchange membrane fuel cell takes hydrogen as fuel, oxygen in the air as oxidant, and a product is clean water. Since the product water freezes at a low temperature, which may cause a series of concurrent problems, a low-temperature startup capability and a startup strategy formulation of the proton exchange membrane fuel cell in a sub-zero environment have always been key topics and problems in the scientific research and engineering development.

Presently, the formulation and regulation ways for a low-temperature startup strategy are developed with a Juche idea of mainly based on a simulation design and partially based on an experimental verification. In an early stage of a large-scale commercialization of the fuel cell, a material cost of the fuel cell is high, and a method for designing a low-temperature startup merely based on an experimental verification may inevitably experience a large amount of failure cases, causing a large amount of material losses and a significant rise in a design cost. Therefore, a simulation design work plays a key role in designing a present control strategy of the low-temperature startup. However, due to a complex mechanism of a low-temperature startup process, an engineering development and application work in the related art mostly designs and formulates the startup strategy based on a high-dimensional simulation tool. Due to the restriction of a high complexity and a low computational efficiency of a high-dimensional model, it is difficult to perform calculation and selection on a large amount of design solutions, and the high-dimensional model is even more difficult to play a due role in an on-line control of a fuel cell system, thus the high-dimensional model is far from meeting a requirement of a present fast-paced engineering development and an iterative design of the fuel cell.

A startup process of the proton exchange membrane fuel cell in the sub-zero environment is a racing process between heating and freezing. How to control the fuel cell to reach a normal working temperature above zero by a heat production of the fuel cell in a short period, and simultaneously to restrain a freezing process, is the key to the research of the low-temperature startup. In the sub-zero environment, water produced in an electrochemical reaction may freeze in electrolyte and an internal pore structure of the fuel cell, thus causing a series of problems. For example, the freezing process is a volume expansion process, which may cause a physical structure of the fuel cell to be deformed, collapsed and even damaged. Ice accumulates in a gas transmission channel, which hinders a supply of reaction gas, causing transmission difficulty of the reaction gas. In a severe case, a voltage reversal phenomenon may occur, causing a corrosion of the fuel cell and reducing a service life of the fuel cell. Long-term freezing of the electrolyte in a proton exchange membrane may cause plastic deformation of a physical structure of the proton exchange membrane, and cause an irreversible damage such as structural damage and perforation in a severe case.

If the control strategy of the low-temperature startup is not set properly, it may cause that the startup of the fuel cell frequently fails in the sub-zero environment, thus causing rapid freezing of the product, and leading to the series of above problems. Therefore, measures of shortening a time period of a low-temperature operation, slowing down a heat loss of the fuel cell at the low temperature, accurately and reasonably formulating the low-temperature startup strategy, and ensuring a successful startup in a low-temperature environment have a long-term significance for improving a reliability, an environmental applicability and a service life of a fuel cell stack and a fuel cell system.

**SUMMARY**

The disclosure aim to solve at least one of technical problems in the related art to some extents.

Accordingly, a first objective of the disclosure is to provide a method for controlling low-temperature startup of a fuel cell. The method is applied to directly predict and evaluate results of a pre-formulated startup strategy and a running condition of the fuel cell in an off-line condition (that is, without performing a test on the low-temperature startup of the fuel cell). Meanwhile, the method may also be applied to an on-line test on the low-temperature startup of the fuel cell. A startup condition of the fuel cell at each moment is monitored in real time through calculation of a low-temperature startup capability index, a working condition of a risk point that may cause a startup failure is warned, a control strategy is adjusted and controlled in real time, to reduce a risk of the startup failure.

To achieve the above objectives, the disclosure provides a method for controlling low-temperature startup of a fuel cell, including:

obtaining a time period $\tau_T(t)$ required for heating the fuel cell from a present temperature $T(t)$ to a freezing point temperature $T_{\text{fusion}}$ in an interior of the fuel cell with a present heating rate at a moment $t$ in a low-temperature startup process of a proton exchange membrane fuel cell;

obtaining a time period $\tau_w^{\text{ab}}(t) + \tau_w^{\text{ice}}(t)$ required for continuously freezing the interior of the fuel cell from a present ice volume fraction $S_{\text{ice}}(t)$ to an allowed ice volume fraction upper limit $s_{\text{ice}}^{\text{limit}}$ with a present freezing rate at the moment $t$, $\tau_w^{\text{ab}}(t)$ representing a time period of a water absorption process of electrolyte, and $\tau_w^{\text{ice}}(t)$ representing a time period from the moment $t$ to a moment when a catalyst layer is full of ice;

obtaining a low-temperature startup capability index $SF_0(t)$ of the fuel cell based on a ratio of $\tau_T(t)$ to $\tau_w^{\text{ab}}(t) + \tau_w^{\text{ice}}(t)$; and

adjusting a control strategy if $SF_0(t) > 1$, to accelerate a heating process, and decrease the time period $\tau_T(t)$ and to obtain $SF_0(t) < 1$, thereby ensuring success of the low-temperature startup of the fuel cell, in which $SF_0(t) > 1$ indicates that a freezing process in the interior of the fuel cell is faster than the heating process at the moment t, which causes failure of the low-temperature startup of the fuel cell in case that the control strategy is not regulated.

Further, the low-temperature startup capability index $SF_0(t)$ of the fuel cell is calculated by:

$$SF_0(t) = \frac{\tau_T(t)}{\tau_w^{\text{ab}}(t) + \tau_w^{\text{ice}}(t)} = \frac{\left(T_{\text{fusion}} - T(t)\right)\Big/\dfrac{dT(t)}{dt}}{\left(s_{\text{ice}}^{\text{limit}} - s_{\text{ice}}(t)\right)\Big/\dfrac{ds_{\text{ice}}(t)}{dt}} \tag{1},$$

in which, $\tau_T(t)$ represents the time period required for heating the fuel cell from the temperature $T(t)$ at the moment $t$ to the freezing point temperature $T_{\text{fusion}}$ in the interior of the fuel cell, $\dfrac{dT(t)}{dt}$ represents the present heating rate at the moment $t$, $\dfrac{ds_{\text{ice}}(t)}{dt}$ represents the present freezing rate at the moment $t$, $s_{\text{ice}}^{\text{limit}}$ represents the allowed ice volume fraction upper limit in the interior of the fuel cell, and $S_{\text{ice}}(t)$ represents the ice volume fraction in the interior of the fuel cell at the moment $t$.

Further, $\tau_T(t)$ is calculated by:

$$\tau_T(t) = \frac{\sum \rho_j Cp_j \delta_j \cdot [T_{\text{fusion}} - T(t)]}{J(t)[E_{\text{rev}}(t) - E_{\text{cell}}(t)] - \left(\Delta P_{\text{coolant}}(t) + \Delta P_{\text{loss}}(t)\right)} \tag{2},$$

in which, $\rho_j$ represents a mass density of a component structure of the fuel cell, $Cp_j$ represents a specific heat capacity of the component structure of the fuel cell, $\delta_j$ represents an average thickness of the component structure of the fuel cell, $T_{\text{fusion}}$ represents the freezing point temperature, $T(t)$ represents the temperature of the fuel cell at the moment $t$ in the low-temperature startup process, $J(t)$ represents a current density at the moment $t$, $Erev(t)$ represents a reversible potential of the fuel cell under a state parameter of the fuel cell at the moment $t$, $Eout(t)$ represents an output voltage of the fuel cell under the state parameter of the fuel cell at the moment $t$, $\Delta P_{coolant}(t)$ represents a heat quantity taken away by cooling liquid, and $\Delta P_{loss}(t)$ represents a heat quantity dissipated by a convection heat exchange between the fuel cell and an environment.

Further, $\tau_w^{ab}(t)$ is calculated by:

$$\tau_w^{ab}(t) = \frac{\lambda_{sat}(t) - \lambda(t)}{\left[\frac{J(t)}{2F} + q_w^{net}(t)\right] \cdot \frac{EW}{\rho_m \omega \delta_{CL}}}$$

(3)

in which, $\lambda_{sat}(t)$ represents a maximum water content absorbed by the electrolyte at the moment $t$ in the low-temperature startup process, $\lambda(t)$ represents a present water content in the electrolyte at the moment $t$ in the low-temperature startup process, $J(t)$ represents a current density at the moment $t$, $F$ represents a Faraday constant, $q_w^{net}(t)$ represents a net flux of transmembrane water transferred from an anode to a cathode of the fuel cell at the moment $t$, $EW$ represents a molar mass of a proton exchange membrane, $\rho_m$ represents a mass density of the proton exchange membrane, $\omega$ represents a volume fraction of the electrolyte in the catalyst layer, and $\delta_{CL}$ represents a thickness of the catalyst layer.

Further, $\tau_w^{ice}(t)$ is calculated by:

$$\tau_w^{ice}(t) = \frac{\left[s_{ice}^{limit} - s_{ice}(t)\right] \cdot \rho_{ice} \varepsilon_{CL} \delta_{CL}}{\left[\frac{J(t)}{2F} + q_w^{net}(t)\right] \cdot M_{H_2O}}$$

(4)

in which, $\rho_{ice}$ represents a mass density of ice, $\varepsilon_{CL}$ represents a porosity of the catalyst layer, $\delta_{CL}$ represents a thickness of the catalyst layer, $J(t)$ represents a current density at the moment $t$, $F$ represents a Faraday constant, $q_w^{net}(t)$ represents a net flux of transmembrane water transmitted from an anode to a cathode of the fuel cell at the moment $t$, $s_{ice}^{limit}$ represents the allowed ice volume fraction upper limit in the interior of the fuel cell, $s_{ice}(t)$ represents the ice volume fraction in the interior of the fuel cell at the moment t, and $M_{H2O}$ represents a molar mass of water.

Further, in the low-temperature startup process of the fuel cell, the temperature $T(t)$ at an initial moment is obtained as a temperature $T(0)$, $SF_0(t)$ at any moment $t$ in the low-temperature startup process in which the fuel cell is heated and started from the temperature T(0) at the initial moment is calculated in combination with the formulas (1) and (2), to monitor a running state of the fuel cell in the low-temperature startup process in real time and to determine whether the fuel cell is started successfully when the fuel cell is started in the temperature T(0) at the initial moment.

Further, the current density $J(t)$ at the moment $t$ is calculated by:

$$J(t) = \frac{I(t)}{S}$$

(5),

in which, $I(t)$ represents a current at the moment $t$, and S represents an electrochemical active area of the fuel cell or a membrane electrode.

Further, in the low-temperature startup process of the fuel cell, the current of the fuel cell rises from 0A at the initial moment to an upper limit current, and the fuel cell continuously runs at the upper limit current; the upper limit current is obtained, the low-temperature startup capability index $SF_0(t)$ at the moment t is calculated in combination with the formulas (1), (2) and (5), to determine whether a failure risk exists in the low-temperature startup process of the fuel cell at the upper limit current.

Further, in the low-temperature startup process of the fuel cell, a current loading speed $V$ is obtained, and the current $I(t)$ at the moment t is calculated based on $I(t) = V \cdot t$, the low-temperature startup capability index $SF_0(t)$ at any moment $t$ is calculated in combination with the formulas (1), (2) and (5), to determine whether the failure risk exists in the low-temperature startup process of the fuel cell at the current loading speed.

Additional aspects and advantages of the disclosure will be given in part in the following descriptions, become apparent in part from the following descriptions, or be learned from the practice of the disclosure.

## BRIEF DESCRIPTION OF THE DRAWINGS

The above and/or additional aspects and advantages of the disclosure will be apparent and more readily appreciated from the following descriptions made with reference to accompanying drawings, in which:

FIG. 1 is a flow chart illustrating a method for controlling low-temperature startup of a fuel cell according to embodiments of the disclosure;
FIG. 2 illustrates a dynamic evolution process of low-temperature startup capability indexes of a fuel cell in the low-temperature startup processes of starting the fuel cell at different startup temperatures;
FIG. 3 illustrates a dynamic evolution process of low-temperature startup capability indexes of a fuel cell in the low-temperature startup processes in which different current loading speeds are used; and
FIG. 4 illustrates a dynamic evolution process of low-temperature startup capability indexes of a fuel cell in the low-temperature startup processes in which different upper limit currents are used.

## DETAILED DESCRIPTION

Reference will now be made herein in detail to embodiments of the disclosure, examples of which are illustrated in the accompanying drawings, in which same or similar numerals represent same or similar elements or elements with same or similar functions throughout. Embodiments described below with reference to the accompanying drawings are exemplary and are intended to explain the disclosure, and should not be construed as limiting the disclosure.

The disclosure provides a method for rapidly formulating and optimizing a low-temperature startup strategy of a proton exchange membrane fuel cell, which may implement an efficient formulation of the low-temperature startup strategy and implement a real-time warning of a high-risk point in a startup process and an online flexible regulation.

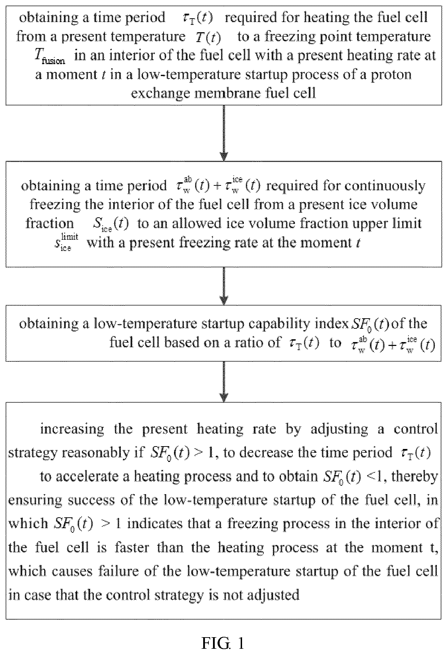

Embodiments of the provide a method for controlling low-temperature startup of a fuel cell, which takes into account both an offline application (screening and pre-specifying the low-temperature startup strategy without performing an actual operation or test) and an online application (monitoring a change condition of a low-temperature startup capability of the fuel cell in real time during the actual operation or test), to implement a real-time characterization of a low-temperature startup state of the fuel cell in a low-temperature startup process of the fuel cell and to implement a quantification and a warning of a low-temperature startup risk. Meanwhile, an operation strategy or a parameter of the fuel cell is adjusted in real time based on the startup risk. As illustrated in FIG. 1, the method for controlling low-temperature startup of a fuel cell includes following steps 1 to 4.

At block 1: a time period $\tau_T(t)$ required for heating the fuel cell from a present temperature $T(t)$ to a freezing point temperature $T_{fusion}$ in an interior of the fuel cell with a present heating rate at a moment $t$ in a low-temperature startup process of a proton exchange membrane fuel cell is obtained.

In detail, $\tau_T(t)$ reflects a speed of a heating process of the fuel cell from $T(t)$ to $T_{fusion}$ at the moment $t$. In other words, under a present control strategy, a ratio of a variable quantity of the temperature heating from $T(t)$ to $T_{fusion}$ to the present heating rate is the time period required for heating the fuel cell from the $T(t)$ to the $T_{fusion}$. As the heating rate changes, the time period $\tau_T(t)$ changes. Therefore, by adjusting the control strategy, the heating rate may be adjusted to increase or decrease the time period $\tau_T(t)$, implementing to accelerate or slow down the heating process.

It should be noted that the moment t may start from moment 0, and an initial temperature $T(t)$ at the moment 0 is an initial temperature of the fuel cell. In an actual working condition, the initial temperature of the fuel cell is an actual temperature of an external environment.

At block 2: under the present control strategy, a time period $\tau_w^{ab}(t) + \tau_w^{ice}(t)$ required for continuously freezing the interior of the fuel cell from a present ice volume fraction $S_{ice}(t)$ to an allowed ice volume fraction upper limit $S_{ice}^{limit}$

with a present freezing rate at the moment $t$ is obtained, $\tau_w^{ab}(t)$ represents a time period of a water absorption process of electrolyte, and $\tau_w^{ice}(t)$ represents a time period from the moment $t$ to a moment when a catalyst layer is full of ice.

$\tau_w^{ab}(t)$ represents a time period of a water absorption process of electrolyte, and $\tau_w^{ice}(t)$ represents a time period from the moment $t$ to a moment when a catalyst layer is full of ice.

In detail, $\tau_w^{ab}(t) + \tau_w^{ice}(t)$ reflects a speed of a freezing process of the fuel cell continuously freezing from the ice volume fraction $s_{ice}(t)$ in the interior of the fuel cell to the allowed ice volume fraction upper limit at the moment t. The freezing process includes a hydration process and a freezing process of a proton exchange membrane. Therefore, the freezing process from the moment 0 to a moment when the ice volume fraction reaches the allowed ice volume fraction upper limit $s_{ice}^{limit}$ is divided into two time periods, respectively a time period of the hydration (water absorption) process of the electrolyte and a time period from a moment when the freezing begins to a moment when the catalyst layer is full of ice.

In addition, the moment t may begin from the moment 0, that is, an initial moment, at which the ice volume fraction in the interior of the fuel cell is 0%, and the allowed ice volume fraction upper limit in the interior of the fuel cell is generally set to 100% or defined based on a product design requirement. In other words, starting from the initial moment, the ice volume fraction in the interior of the fuel cell rises from 0% to 100%.

At block 3: a low-temperature startup capability index $SF_0(t)$ of the fuel cell is obtained based on a ratio of $\tau_T(t)$ to $\tau_w^{ab}(t) + \tau_w^{ice}(t)$,

In detail, $SF_0(t)$ reflects a relative speed between the heating process of the fuel cell (from the moment t to a moment when temperature reaches the freezing point temperature) and the freezing process in the electrode (including the hydration process and the freezing process of the proton exchange membrane).

At block 4: if $SF_0(t) > 1$, it represents that the freezing process in the interior of the fuel cell is faster than the heating process at the moment $t$, which causes that failure of the low-temperature startup of the fuel cell in case that the control strategy is not regulated. Therefore, the control strategy is adjusted to increase the present heating rate, decrease the time period $\tau_T$ and accelerate the heating process, and to obtain $SF_0(t)<1$, thereby ensuring that success of the low-temperature startup of the fuel cell.

In detail, $SF_0(t)<1$ represents that the heating process is faster than the freezing process at the moment t. The fuel cell continues to run based on the current control strategy, and the fuel cell has been heated to the freezing point temperature before the fuel cell is full of ice. Then the ice begins to melt, and the running of the fuel cell may gradually return to normal, which is conducive to a successful low-temperature startup of the fuel cell. The lower $SF_0(t)$ ($< 1$), the faster the heating process is than the freezing process, and the lower the risk of the low-temperature startup process is. The closer $SF_0(t)$ is to 1 or even higher than 1, the greater the risk of the low-temperature startup process is. $SF_0(t)>1$ represents that the freezing process of the fuel cell is faster than the heating process of the fuel cell at the moment $t$, which may cause serious freezing in the interior of the fuel cell when the heating process is not effectively accelerated or the freezing process is not slowed down, thereby easily causing the failure of the low-temperature startup process. Therefore, when it is detected in real time that the freezing process of the fuel cell is faster than the heating process at the moment $t$, that is, $SF_0(t)> 1$, or when the freezing process quickly catches up with the heating process, that is, $SF_0(t)<$ 1 but $SF_0(t)$ rises rapidly, the heating rate is improved and the heating process is accelerated by changing the control strategy, to enable the heating process to be faster than the freezing process, to decrease $SF_0(t)$ or effectively slow down a rise speed of $SF_0(t)$, thereby effectively ensuring that $SF_0(t) <1$ when the startup is completed, and the fuel cell is heated to the freezing point temperature before the fuel cell is full of ice and may not freeze again in the future, such that the fuel cell may be started normally.

In conclusion, with the method, a low-temperature startup risk may be predicted by measuring the value of $SF_0(t)$ at the moment $t$ and a dynamic change speed of $SF_0(t)$ with time, thereby implementing a quantification and a warning of the low-temperature startup risk. The initial temperature of the fuel cell, that is, an environment temperature in the environment where the fuel cell is located, affects the time period of the low-temperature startup process of the fuel cell to a certain extent. The lower the initial temperature, the longer the fuel cell heats up to the freezing point temperature. Therefore, with the method, it may be predicted whether a risk of a startup failure exists in a low-temperature environment where the fuel cell is located. The value of $SF_0(t)$ at any moment $t$ is detected in real time in the low-temperature startup process, that is, a speed relationship between the heating process and the freezing process at the moment t is determined. In case that the freezing process is faster than the heating process, which means $SF_0(t)> 1$, the fuel cell may be full of ice when the fuel cell is not heated up to the freezing point temperature if the fuel cell continues to run under the current control strategy. In case that the freezing process quickly catches up with the heating process, it means that the value of $SF_0(t)$ rises too fast. In this case, the heating process is accelerated by improving the control strategy (such as adjusting a current, a state parameter of fuel gas, and the like), to ensure that the heating process is faster than the freezing process (or the heating process is speeded up in time when the heating process falls behind). It may be effectively ensured that the fuel cell has been heated up to the freezing point temperature before the fuel cell is full of ice, such that the fuel cell may never be full of ice, thereby ensuring the success of the startup process. In a whole loading process, as long as the freezing process is faster than the heating process or the freezing process quickly catches up with the heating process, regulation may be applied to accelerate the heating process in time, thus implementing an effective monitoring and adjustment of the whole low-temperature startup process.

The method for controlling low-temperature startup of a fuel cell according to the disclosure is intuitive, effective and easy to be implemented. With the method, a development trend of the present running state is quickly characterized in real time, the trend and the success or failure of the low-temperature startup process are predicted and determined, the risk in the low-temperature startup process is quantified in real time, and a failure occurrence of the low-temperature startup process is effectively avoided.

In another embodiment of the disclosure, the low-temperature startup capability index $SF_0(t)$ of the fuel cell is obtained by:

$$SF_0(t) = \frac{\tau_{\mathrm{T}}(t)}{\tau_{\mathrm{w}}^{\mathrm{ab}}(t) + \tau_{\mathrm{w}}^{\mathrm{ice}}(t)} = \frac{\left(T_{\mathrm{fusion}} - T(t)\right) \Big/ \dfrac{dT(t)}{dt}}{\left(s_{\mathrm{ice}}^{\mathrm{limit}} - s_{\mathrm{ice}}(t)\right) \Big/ \dfrac{ds_{\mathrm{ice}}(t)}{dt}}$$

(1).

in which, $\tau_{\mathrm{T}}(t)$ represents the time period required for heating the fuel cell from the temperature $T(t)$ to the freezing point temperature $T_{\mathrm{fusion}}$ in the interior of the fuel cell at the moment $t$, $T_{\mathrm{fusion}}$ (unit: k) represents the freezing point temperature, $T(t)$ (unit: k) represents a real-time temperature of the fuel cell at the moment $t$, $\tau_{\mathrm{w}}^{\mathrm{ab}}(t)$ represents the time period of the water absorption process of the electrolyte, $\tau_{\mathrm{w}}^{\mathrm{ice}}(t)$ represents the time period from the moment when the freezing begins to the moment when the catalyst layer is full of ice, $s_{\mathrm{ice}}^{\mathrm{limit}}$ represents the allowed ice volume fraction upper limit in the interior of the fuel cell, which is generally set to 100% or defined based on the product design requirement, $s_{\mathrm{ice}}(t)$ represents a real-time ice volume fraction in the interior of the fuel cell at the moment $t$, $\dfrac{dT(t)}{dt}$ represents the heating rate at the moment $t$, and $\dfrac{ds_{\mathrm{ice}}(t)}{dt}$ represents the freezing rate at the moment $t$.

In another embodiment of the disclosure, $\tau_{\mathrm{T}}(t)$ is calculated by:

$$\tau_T(t) = \frac{\sum \rho_j Cp_j \delta_j \cdot \left[T_{\mathrm{fusion}} - T(t)\right]}{J(t)\left[E_{\mathrm{rev}}(t) - E_{\mathrm{cell}}(t)\right] - \left(\Delta P_{\mathrm{coolant}}(t) + \Delta P_{\mathrm{loss}}(t)\right)}$$

(2).

In the formula, $\rho_j$ (unit: kg m$^{-3}$) represents a mass density of a component structure j of the fuel cell, $Cp_j$ (unit: J kg$^{-1}$ K$^{-1}$) represents a specific heat capacity of the component structure j of the fuel cell, $\delta_j$ (unit: m) represents an average thickness of the component structure j of the fuel cell, all of which belong to structure physical parameters of the fuel cell, and values of which are given by selection of a component material type of the fuel cell. $T_{\mathrm{fusion}}$ (unit: K) represents the freezing point temperature, a value of which may be 273.15K or obtained by employing various common ways for calculating and correcting the freezing point temperature. $T(t)$ (unit: K) represents the temperature of the fuel cell at the moment $t$ in the low-temperature startup process, a value of which may be defined by a temperature of the catalyst layer or other average temperature. $J(t)$ (unit: A cm$^{-2}$) represents a current density at the moment $t$, a numerical value of which is a running current density in the present loading process or the running process, belongs to a key setting parameter in the low-temperature startup process and is determined by the loading strategy. $J(t)$ may be adjusted in real time by adjusting a current loading speed and an upper limit current in the low-temperature startup process. $E_{rev}(t)$ (unit: V) represents a reversible potential of the fuel cell under the state parameter of the fuel cell at the moment $t$. $E_{out}(t)$ (unit: V) represents an output voltage of the fuel cell under the state parameter of the fuel cell at the moment $t$. A value of $E_{rev}(t)$ is calculated by a well-known Nernst equation and various improved forms of the Nernst equation. A value of $E_{out}(t)$ is obtained by data feedback of a real-time voltage in a test process (actual voltage data may be employed in an actual online test process) or a performance theoretical calculation (which may be calibrated and estimated by a simplified performance model or calculated by a detailed multi-dimensional simulation tool). $\Delta P_{coolant}(t)$ (unit: W m$^{-2}$V) represents the heat quantity taken away by cooling liquid, and $\Delta P_{loss}(t)$ (unit: W m$^{-2}$V) represents the heat quantity dissipated by the convection heat exchange between the fuel cell and the environment. A value of $\Delta P_{coolant}(t)$ is calculated from a coolant characteristic (a density, a specific heat capacity, a convection heat exchange coefficient, etc.), a coolant flow rate and a temperature difference between a fuel cell stack and coolant (a detailed value is determined by a type and a composition of employed coolant). A value of $\Delta P_{loss}(t)$ is calculated from a temperature difference between the fuel cell stack and the environment, and a natural or forced convection heat exchange coefficient.

In another embodiment of the disclosure, the time period $\tau_{w}^{ab}(t)$ of the water absorption process of the electrolyte is calculated by:

$$\tau_{w}^{ab}(t)=\frac{\lambda_{sat}(t)-\lambda(t)}{\left[\dfrac{J(t)}{2F}+q_{w}^{net}(t)\right]\cdot\dfrac{EW}{\rho_{m}\omega\delta_{CL}}} \tag{3}$$

In the formula, $\lambda_{sat}(t)$ represents a maximum water content absorbed by the electrolyte at the moment $t$ in the low-temperature startup process, and $\lambda(t)$ represents a present water content in the electrolyte at the moment $t$ in the low-temperature startup process. A value of $\lambda_{sat}(t)$ is calculated based on water absorption and discharge characteristics of the proton exchange membrane employed in the fuel cell, which belongs to a physical parameter or relationship of the proton exchange membrane. A value of $\lambda(t)$ is calculated based on a water yield and loss of an electrochemical reaction of the fuel cell and the water absorption and discharge characteristics of the proton exchange membrane (in a practical application, by constructing a general numerical model independently or extracting in combination with a relevant process and a parameter of an existing simulation tool as needs). $J(t)$ (unit: Am$^{-2}$) represents a current density at the moment $t$. $F$ represents a Faraday constant. $q_{w}^{net}(t)$ (unit: mol m$^{-2}$ s$^{-1}$) represents a net flux of transmembrane water transmitted from an anode to a cathode of the fuel cell at the moment $t$, which may be calculated in combination with a general Butler-Volmer equation for calculating electrochemical reaction rate or other equations. The calculation process includes, but is not limited to, the following detailed water transmembrane transmission process: ① a back diffusion process of water; ② an electroosmotic drag process of water; (3) a hydraulic differential infiltration process of water, and the like (the above processes are all general water transmission mechanisms in the interior of the fuel cell). $EW$ (unit: kg mol$^{-1}$) represents a molar mass of the proton exchange membrane, $\rho_{m}$ (unit: kg m$^{-3}$) represents a mass density of the proton exchange membrane, belonging to a structural design parameter of the fuel cell. $\omega$ represents a volume fraction of the electrolyte in the catalyst layer. $\delta_{CL}$ (unit: m) represents a thickness of the catalyst layer.

In another embodiment of the disclosure, the time period $\tau_{w}^{ice}(t)$ from the moment when the freezing begins to the moment when the catalyst layer is full of ice is obtained by:

$$\tau_{w}^{ice}(t)=\frac{\left[s_{ice}^{limit}-s_{ice}(t)\right]\cdot\rho_{ice}\varepsilon_{CL}\delta_{CL}}{\left[\dfrac{J(t)}{2F}+q_{w}^{net}(t)\right]\cdot M_{H_2O}} \tag{4}$$

In the formula, $\rho_{ice}$ (unit: kg m$^{-3}$) represents a mass density of ice, $\varepsilon_{CL}$ (unit: m) represents a porosity of the catalyst layer, $\delta_{CL}$ (unit: m) represents the thickness of the catalyst layer, $J(t)$ (unit: A m$^{-2}$) represents the current density at the moment $t$, $F$ represents a Faraday constant, $q_w^{net}(t)$ is the same as that used in formula (3), $s_{ice}^{limit}$ and $s_{ice}(t)$ are respectively the same as those used in formula (1), which refer to the ice volume fractions in the interior of the fuel cell at the moment t, and $M_{H2O}$ (unit: kg mol$^{-1}$) represents a molar mass of water.

In another embodiment of the disclosure, in the startup process of the fuel cell, the temperature $T(t)$ at the initial moment is obtained as $7(0)$, $SF_0(t)$ at any moment in the startup process in which the fuel cell is heated and started from the temperature $T(0)$ at the initial moment is calculated in combination with formulas (1) and (2), to monitor the running state of the fuel cell in the low-temperature startup process in real time and determine whether the fuel cell is started successfully when the startup begins with the temperature T(0) at the initial moment.

In detail, when the fuel cell is started in the temperature T0 at the initial moment, the temperature T0 of the fuel cell is the temperature of the environment where the fuel cell is located. The whole heating process may be correspondingly lengthened when the fuel cell at the initial moment is in a low temperature, which may cause the increasing of $SF0(t)$. In this case, the heating process may be slower than the freezing process if the startup is continued when other conditions remain unchanged, thereby causing that the interior of the fuel cell is full of ice when an internal temperature of the fuel cell is not heated up to the freezing point temperature, such that the low-temperature startup fails. Therefore, with the method, a range of the startup temperature of the fuel cell at the initial moment may be predicted in a condition where other working condition is a basic working condition, and different control strategies of the fuel cell are formulated at different startup temperatures, which may effectively avoid failure of the startup of the fuel cell due to the low temperature and implement a warning of an initial startup temperature of the fuel cell.

In another embodiment of the disclosure, the current density $J(t)$ at the moment $t$ is obtained by:

$$J(t) = \frac{I(t)}{S} \qquad (5),$$

in which, S (unit: m$^2$) represents an electrochemical active area of the fuel cell or a membrane electrode, and $I(t)$ (unit: A) represents the current at the moment $t$.

In an embodiment of the disclosure, in the startup process of the fuel cell, the current of the fuel cell rises from 0A at the initial moment to the upper limit current, and the fuel cell continuously runs with the upper limit current. The upper limit current is obtained. The low-temperature startup capability index $SF_0(t)$ at the moment t is calculated in combination with the formulas (1), (2) and (5), to determine whether a failure risk exists in the low-temperature startup process of the fuel cell at any moment t under the upper limit current, which helps to determine the upper limit current (one of key control parameters) in the control strategy of the low- temperature startup, and implements the warning of a startup state and a pre-formulation of a startup solution.

In detail, in the startup process of fuel cell, the current gradually rises from 0A at the initial moment. The upper limit current is set first at an initial startup stage of the fuel cell. The current of the fuel cell rises from 0A at the initial moment to the upper limit current and the startup is continued with the upper limit current in the startup process of the fuel cell. In order to determine an influence of the setting of the upper limit current on the startup process of the fuel cell, the current of the fuel cell generally rises at a certain loading rate of the current. The loading rate is generally a rate under a typical basic working condition. Then, it may be determined whether the failure risk of the startup exists in the fuel cell under the setting of the upper limit current by calculating the low-temperature startup capability indexes $SF_0(t)$ at different moments, to implement the warning and formulation of the setting of the upper limit current. The low-temperature startup capability index may be adjusted by adjusting the upper limit current when $SF_0(t) > 1$ or the value of $SF_0(t)$ rises rapidly during the running of the fuel cell, thereby ensuring that $SF_0(t) < 1$ at a moment when the startup ends, and ensuring a successful startup.

In another embodiment of the disclosure, in the startup process of the fuel cell, the current loading speed $V$ is obtained, the current $I(t)$ at the moment $t$ is calculated by $I(t) = V \cdot t$. The low-temperature startup capability index $SF_0(t)$ at any moment in the low-temperature startup process is calculated in combination with formulas (1), (2) and (5), to determine whether the failure risk exists in the low-temperature startup process of the fuel cell at the current loading speed (also called the loading rate of the current).

In detail, the low-temperature startup capability index $SF_0(t)$ at any moment t is calculated, and the fuel cell runs continuously based on a present current loading speed in case that $SF_0(t) < 1$, thereby ensuring a normal startup of the fuel cell. In case that $SF_0(t) > 1$ or the value of $SF_0(t) > 1$ rises rapidly at a certain moment t, the current loading strategy (loading rate) is re-adjusted to ensure that $SF_0(t) < 1$ at the moment when the low-temperature startup completes.

In other words, before the upper limit current is loaded, the current $I(t)$ at the moment t is determined by the current loading speed (and the upper limit current) set in the loading process. The current loading speed V is set before the startup. In case that the current loading speed is constant, a current recorded at the moment $t$ is represented by $I(t)$

= $V \cdot t$. The current density $J(t)$ is calculated by formula (5) based on the current, and the calculated $J(t)$ is substituted into formula (2). Then, a corresponding heating period $\tau_T(t)$ is calculated, and the heating period $\tau_T(t)$ is compared with

the freezing period $\tau_w^{ab}(t) + \tau_w^{ice}(t)$ . In combination with formula (1), if it is measured at any moment t in the low-temperature startup process that the freezing process is slower than the heating process, that is, $SF_0(t) < 1$, the current loading speed remains unchanged, the startup is continued until the current rises up to the upper limit current, and then the startup is continued until the whole startup process is completed. If it is measured that the freezing process is faster than or quickly catches up with the heating process at the moment t, that is, $SF_0(t) > 1$ or the value of $SF_0(t)$ rises rapidly, and the running current continuously rises later at the current loading speed in the startup process, the interior of the fuel cell is full of ice before the temperature of the fuel cell rises to the freezing point temperature and the startup of the fuel cell fails. Therefore, the current loading speed may be adjusted, to accelerate the heating, shorten the heating process, and slow down the freezing process. In this case, by adjusting the current loading speed from $V$ to $V_1$, the current is $I_1(t) = I(t) + V_1 \cdot t_1$ when the startup is continued to the moment $t_1$. The current density is calculated by formula (3), and the obtained current density is substituted into formula (2) to continuously calculate the heating period $\tau_T(t)$.

Then the heating period is compared with the freezing period $\tau_w^{ab}(t) + \tau_w^{ice}(t)$ . In combination with formula (1), in case that $SF_0(t)<1$, the startup is continued until the current is loaded to the upper limit current, and then the startup is completed at the upper limit current. In case that $SF_0(t) > 1$ or the value of $SF_0(t)$ still rises rapidly, the current loading speed is adjusted based on the above way until the current of the fuel cell rises to a set upper limit current, and the current is adjusted and controlled in time, thereby ensuring that $SF_0(t)<1$ when the startup of the fuel cell ends, and implementing the successful startup of the fuel cell.

In the disclosure, the relevant parameters mentioned are all common parameters in the fields of the scientific research of the fuel cell and the engineering research and development. Therefore, the method may be used for off-line modeling and an on-line test alone, and may also be used for embedded application in combination any simulation tool of the fuel cell and the control strategy of the fuel cell.

Compared with the way in the related art, the disclosure has a higher efficiency and a lower cost. In the engineering development, the way in the related art mostly relies on multiple sensors and a comprehensive evaluation of a controller on numerous sensor signals, or relies on an inefficient and complex dynamic simulation tool of the low-temperature startup. On the one hand, a present startup state of the fuel cell may not be intuitively quantified, on the other hand, the characterization efficiency is low, which may not meet a present increasing fast-paced development process of the fuel cell.

With the method for the strategy formulation in the low-temperature startup process according to the disclosure, real-time quantification and intuitive evaluation of the low-temperature startup state are implemented by the introduction of the low-temperature startup capability index, and the running state and the failure risk at any moment in the low-temperature startup process are quantified and visualized, which has high efficiency and may be widely applied to a pre-development of the low-temperature startup strategy of the fuel cell. Meanwhile, real-time monitoring on a running state of a stack of a fuel cell system in the low-temperature startup process is implemented in combination with a control of the fuel cell system. In combination with the control of the fuel cell system, an on-line regulation of the low-temperature startup process is implemented, the flexibility of the low-temperature startup strategy of the fuel cell is improved, and an off-line prediction and formulation of the low-temperature startup strategy and an on-line regulation capability of the system and the fuel cell stack of the proton exchange membrane are effectively improved.

In order to further explain the influence of the temperature at the initial moment of the startup of the fuel cell, the current loading speed and the upper limit current of the fuel cell on the startup process in the disclosure, different working conditions are set. In case that one of the temperature at the initial moment, the current loading speed and the upper limit current of the fuel cell changes, the influence on the low-temperature startup is determined, which will be described in the following.

(1) The influence of the temperature of the fuel cell at the initial moment of the startup of the fuel cell is studied as follows.

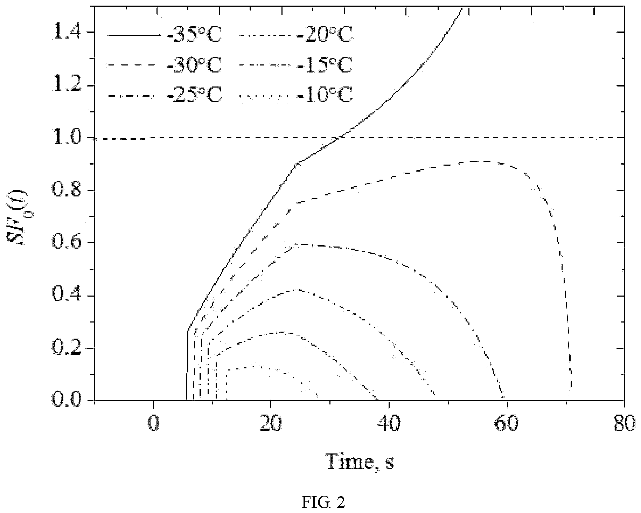

In the startup process of the fuel cell, initial water content in the electrolyte is 5. The current loading speed and the upper limit current are set as conforming the basic working condition, that is, the current loading speed is 5 A s$^{-1}$, and the upper limit current is 120A. Then, the low-temperature startup process is studied in cases that the temperature of the fuel cell at the initial moment of the startup of the fuel cell, i.e., the environment temperature where the fuel cell is located, is -35°C, -30°C, -25°C, -20°C, -15°C and 10°C, respectively. Detailed results are illustrated in FIG. 2.

As illustrated in FIG. 2, in the working condition of -35°C, water produced by the electrochemical reaction is firstly absorbed by the proton exchange membrane and the electrolyte at the initial stage of the low-temperature startup. The freezing process starts significantly when the water content in the proton exchange membrane and the electrolyte are saturated. The heating rate of the fuel cell is almost linearly increased with constantly loading the current (5A s$^{-1}$), heating of the fuel cell is accelerated, and $SF_0(t)$ basically increases linearly. The current is loaded to a maximum current (120 A) at the moment 24s. With a continuous rise of the temperature of the fuel cell, the temperature difference between the fuel cell and the environment increases, and the heat quantity dissipated by the convection heat exchange gradually increases. Therefore, the rise process of the temperature of the fuel cell is slowed down, and the heating rate is reduced. With the rise of the temperature, the water absorption capacity of the electrolyte continuously increases, and an increasing rate is continuously accelerated, such that the freezing rate is declined, and a declining degree is greater than that of the heating rate. With the interaction of many aspects, the rise rate of $SF_0(t)$ is slowed down, and a rate at which the freezing process catches up with the heating process decreases. With the continuous development of the low-temperature startup process, a temperature difference between the fuel cell and the environment becomes higher and higher, the fuel cell has a serious heat loss, and the heating process of the fuel cell is greatly slowed down, which cause that the rate of the freezing process catching up with the heating process is accelerated, the rise rate of $SF_0(t)$ is gradually increased until $SF_0(t)$ is greater than 1, and finally the startup fails.

(2) The influence of the current loading speed is studied as follows.

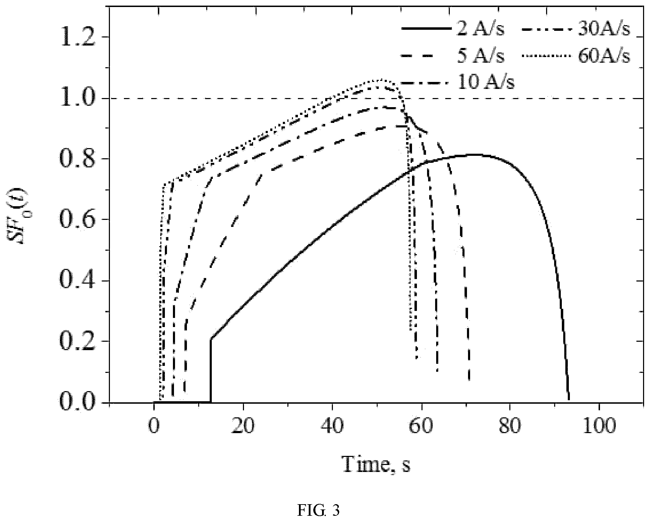

In the startup process of the fuel cell, the initial water content in the electrolyte is 5, and the temperature at the initial moment of the startup of the fuel cell and the upper limit current of the fuel cell are set as conforming the basic working condition. That is, the temperature of the fuel cell at the initial moment of the startup of the fuel cell is -30°C, and the upper limit current is 120A. Then, effects of different loading speeds in the low-temperature startup are studied in case that the current of the fuel cell is loaded from 0 at the initial moment to the upper limit current 120A. The current loading speed is illustrated in Table 1, and detailed measurement results are illustrated in FIG. 3.

Table 1 Current Loading Strategy

| Current | Current loading speed | Current loading period |
|---|---|---|
| 0→120 A | 2 A s$^{-1}$ | 60 s |
| 0→120 A | 5 A s$^{-1}$ | 24 s |
| 0→120 A | 10 A s$^{-1}$ | 12 s |
| 0→120 A | 30 A s$^{-1}$ | 4 s |
| 0→120 A | 60 A s$^{-1}$ | 2 s |

As illustrated in FIG. 3, it may be seen that $SF_0(t)$ gradually increases and exceeds 1 at the moment 43s under the current loading speed 30 A s$^{-1}$, and the heating process has slightly lagged behind the freezing process. However, the startup of the fuel cell still successes. A main reason will be described as follows. Serious blockage and obvious performance attenuation of the fuel cell in a late stage of the low-temperature startup process causes the rise of waste heat quantity and the rise of the heating rate of the fuel cell, such that the heating process of the fuel cell is accelerated and is gradually ahead of the freezing process. $SF_0(t)$ narrowly falls below 1 before the end of the low-temperature startup process, and a successful the low-temperature startup is achieved finally. However, in an actual engineering application, the limit condition should be avoided, and it should be ensure that $SF_0(t)$ is below 1 or even lower in the whole low-temperature startup process as much as possible. For the current loading speed 60 A s$^{-1}$, it may be seen in FIG. 3 that a macro performance of the fuel cell and a change regularity of $SF_0(t)$ are close to a working condition of the current loading speed 30A s$^{-1}$ in the low-temperature startup process, but the low temperature startup fails. It may be seen in FIG. 3 that, it also appeared in the late stage of the low-temperature startup process that $SF_0(t)$ exceeds 1 in a working condition of 60A s$^{-1}$. Although the electrical performance is decreased in the late stage and the heating rate is increased, $SF_0(t)$ is also declined. However, the value of $SF_0(t)$ does not decrease below 1 before the performance declines to the lower limit. Therefore, the low-temperature startup fails.

(3) The influence of the upper limit current is studied as follows.

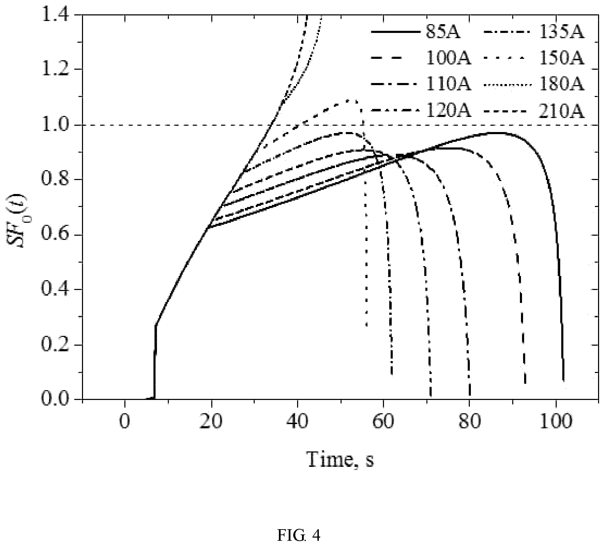

In the startup process of the fuel cell, the initial water content in the electrolyte is 5, and the temperature at the initial moment of the startup of the fuel cell and the current loading speed of the fuel cell are set as conforming the basic working condition. That is, the temperature of the fuel cell at the initial moment of the startup of the fuel cell is -30°C, and the current loading speed is 5 A.S$^{-1}$. Then the influence on the low-temperature startup is studied when the current of the fuel cell is loaded from 0 at the initial moment to the upper limit current 95A, 100A, 110A, 120A, 135A, 150A, 180A, and 210A at a certain current loading speed, and a detailed measurement result is illustrated in FIG. 4.

When the upper limit current is too high (> 150 A), the freezing process continuously catches up with the heating process, and $SF_0(t)$ continuously rises. Since the fuel cell radiates heat to the environment too quickly in the late stage of the low-temperature startup process, the freezing process gradually exceeds the heating process. $SF_0(t)$ rises above 1 gradually, and presents a continuous rising trend, thereby causing the failure of the low-temperature startup process of the fuel cell.

When the upper limit current is low (95~150 A), it may be seen in FIG. 4 that, the heating process of the fuel cell is faster than the freezing process in an early stage of the low-temperature startup process, but the increasing of the heating rate is slower than the increasing of the freezing rate. Therefore, $SF_0(t)$ gradually increases in the early stage of the low-temperature startup process, and the freezing process continues to catch up with the heating process, as illustrated in FIG 4. With a continuous operation of the fuel cell, a catching-up speed of the freezing process gradually decreases, an advancing speed of the freezing process is gradually equal to an advancing speed of the heating process in a middle stage of the low-temperature startup process, and the rise speed of $SF_0(t)$ gradually becomes gentle. In the late stage of the low-temperature startup process, with the increase of the total amount of ice, the low-temperature startup state of the fuel cell deteriorates, the performance of the fuel cell also begins to decay, and the waste heat quantity increases. The decrease of the heating rate of the fuel cell gradually slows down and the heating rate gradually shows a rise trend. Meanwhile, since a rise speed of the water absorption capacity of the electrolyte is accelerated with the rise of the temperature, the freezing rate decreases continuously, the advancing speed of the heating process is accelerated and the advancing speed of the freezing process is slowed down, thereby causing that $SF_0(t)$ shows a gradual downward trend in the late stage of the low-temperature startup process. In addition, in a range 95~150A of the upper limit current, with the decrease of the upper limit current, a total amount of heat production of the fuel cell is reduced in the low-temperature startup process, and a low-temperature startup period may become correspondingly long, as illustrated in FIG. 4.

When the upper limit current is too low (< 95 A), a maximum amount of heat production of the fuel cell is limited, it is considered that the temperature difference between the fuel cell and the environment is increased in the low-temperature startup process, and a heat loss process may become serious gradually. With the advancement of the low-temperature startup process, the quantity of waste heat production may gradually be insufficient to rise and maintain the temperature of the fuel cell. Therefore, a low upper limit current may also cause the failure of the low-temperature startup process. From a change process of $SF_0(t)$, the low upper limit current may help to widen the advantage of the heating process ahead of the freezing process in the early stage of the low-temperature startup process. However, it may cause that a period of the rise stage of $SF_0(t)$ becomes long, and that a maximum value of $SF_0(t)$ in a condition of the low upper limit current is gradually higher than that in a condition of a medium upper limit current in the late stage of the low-temperature startup process.

In the description of the disclosure, reference throughout this specification to "an embodiment," "some embodiments," "an example," "a specific example," or "some examples," and the like means that a particular feature, structure, material or feature described in connection with the embodiment or example is included in at least one embodiment or example of the disclosure. The appearances of the above phrases throughout this specification are not necessarily referring to the same embodiment or example. Moreover, the particular feature, structure, material or feature described may be combined in any one or more embodiments or examples in a suitable manner. Furthermore, without contradicting each other, the skilled in the art may combine different embodiments or examples described in this specification and features of different embodiments or examples.

In addition, the terms "first" and "second" are only for description purpose, and cannot be understood as indicating or implying relative importance or implicitly indicating the number of indicated technical features. Therefore, the features defined with "first" and "second" can include at least one of the features explicitly or implicitly. In addition, in the description of the disclosure, the terms "a plurality of" and "multiple" mean two or more, such as two and three, unless specified otherwise.

Any procedure or method described in a flow chart or described herein in other ways may be understood to include one or more modules, segments or portions of codes of executable instructions for achieving specific logical functions or steps in the procedure, and the scope of a preferred embodiment of the disclosure includes other implementations. The order of execution is different from that which is depicted or discussed, including executing functions in a substantially simultaneous manner or in an opposite order according to the related functions, which should be understood by those skilled in the art which embodiments of the disclosure belong to.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More detailed examples (non-exhaustive list) of the computer readable medium include: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memory.

It should be understood that each part of the disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above embodiment method may be achieved by commanding the related hardware with a program. The program may be stored in a computer readable storage medium, and the program includes one or a combination of the steps in the method embodiments when operated on a computer.

In addition, each function unit of each embodiment of the disclosure may be integrated in a processing module, or these units may be separate physical existence, or two or more units are integrated in a processing module. The integrated module may be realized in a form of hardware or in a form of software function modules. When the integrated module is realized in the form of software function module and is sold or used as a standalone product, the integrated module may be stored in a computer readable storage medium.

The storage medium mentioned above may be a read-only memory, a magnetic disk or CD, etc. Although embodiments of the disclosure have been shown and described above, it should be understood that the above embodiments are exemplary and should not be construed as limiting the disclosure. The skilled in the art can make changes, modifications, substitutions and variations to the above embodiments within the scope of the disclosure.

## Claims

1. A method for controlling low-temperature startup of a fuel cell, comprising:

    obtaining a time period $\tau_T(t)$ required for heating the fuel cell from a present temperature $T(t)$ to a freezing point temperature $T_{\text{fusion}}$ in an interior of the fuel cell with a present heating rate at a moment t in a low-temperature startup process of a proton exchange membrane fuel cell;

    obtaining a time period $\tau_w^{\text{ab}}(t) + \tau_w^{\text{ice}}(t)$ required for continuously freezing the interior of the fuel cell from a present ice volume fraction $S_{\text{ice}}(t)$ to an allowed ice volume fraction upper limit $S_{\text{ice}}^{\text{limit}}$ with a present freezing rate at the moment $t$, $\tau_w^{\text{ab}}(t)$ representing a time period of a water absorption process of electrolyte, and $\tau_w^{\text{ice}}(t)$ representing a time period from the moment $t$ to a moment when a catalyst layer is full of ice;

    obtaining a low-temperature startup capability index $SF_0(t)$ of the fuel cell based on a ratio of $\tau_T(t)$ to $\tau_w^{\text{ab}}(t) + \tau_w^{\text{ice}}(t)$ ; and

    increasing the present heating rate by adjusting a control strategy reasonably if $SF_0(t) > 1$, to decrease the time period $\tau_T(t)$ to accelerate a heating process and to obtain $SF_0(t) < 1$, thereby ensuring success of the low-temperature startup of the fuel cell, wherein $SF_0(t) > 1$ indicates that a freezing process in the interior of the fuel cell is faster than the heating process at the moment t, which causes failure of the low-temperature startup of the fuel cell in case that the control strategy is not adjusted.

2. The method of claim 1, wherein the low-temperature startup capability index $SF_0(t)$ of the fuel cell is calculated by:

$$SF_0(t) = \frac{\tau_{\mathrm{T}}(t)}{\tau_{\mathrm{w}}^{\mathrm{ab}}(t) + \tau_{\mathrm{w}}^{\mathrm{ice}}(t)} = \frac{\left(T_{\mathrm{fusion}} - T(t)\right) \Big/ \dfrac{dT(t)}{dt}}{\left(s_{\mathrm{ice}}^{\mathrm{limit}} - s_{\mathrm{ice}}(t)\right) \Big/ \dfrac{ds_{\mathrm{ice}}(t)}{dt}}$$

$$(1),$$

in which, $\tau_{\mathrm{T}}(t)$ represents the time period required for heating the fuel cell from the temperature $T(t)$ at the moment

$t$ to the freezing point temperature $T_{\mathrm{fusion}}$ in the interior of the fuel cell, $\dfrac{dT(t)}{dt}$ represents the present heating rate at the moment $t$, $\dfrac{ds_{\mathrm{ice}}(t)}{dt}$ represents the present freezing rate at the moment $t$, $s_{\mathrm{ice}}^{\mathrm{limit}}$ represents the allowed ice volume fraction upper limit in the interior of the fuel cell, and $S_{\mathrm{ice}}(t)$ represents the ice volume fraction in the interior of the fuel cell at the moment $t$.

3. The method of claim 1 or 2, wherein $\tau_{\mathrm{T}}(t)$ is calculated by:

$$\tau_T(t) = \frac{\sum \rho_j Cp_j \delta_j \cdot [T_{\mathrm{fusion}} - T(t)]}{J(t)[E_{\mathrm{rev}}(t) - E_{\mathrm{cell}}(t)] - \left(\Delta P_{\mathrm{coolant}}(t) + \Delta P_{\mathrm{loss}}(t)\right)}$$

$$(2),$$

in which, $\rho_j$ represents a mass density of a component structure of the fuel cell, $Cp_j$ represents a specific heat capacity of the component structure of the fuel cell, $\delta_j$ represents an average thickness of the component structure of the fuel cell, $T_{\mathrm{fusion}}$ represents the freezing point temperature, $T(t)$ represents the temperature of the fuel cell at the moment $t$ in the low-temperature startup process, $J(t)$ represents a current density at the moment $t$, $Erev(t)$ represents a reversible potential of the fuel cell under a state parameter of the fuel cell at the moment $t$, $Eout(t)$ represents an output voltage of the fuel cell under the state parameter of the fuel cell at the moment $t$, $\Delta P_{\mathrm{coolant}}(t)$ represents a heat quantity taken away by cooling liquid, and $\Delta P_{\mathrm{loss}}(t)$ represents a heat quantity dissipated by a convection heat exchange between the fuel cell and an environment.

4. The method of claim 1, wherein $\tau_{\mathrm{w}}^{\mathrm{ab}}(t)$ is calculated by:

$$\tau_{\mathrm{w}}^{\mathrm{ab}}(t) = \frac{\lambda_{\mathrm{sat}}(t) - \lambda(t)}{\left[\dfrac{J(t)}{2F} + q_{\mathrm{w}}^{\mathrm{net}}(t)\right] \cdot \dfrac{EW}{\rho_{\mathrm{m}} \omega \delta_{\mathrm{CL}}}}$$

$$(3)$$

in which, $\lambda_{\mathrm{sat}}(t)$ represents a maximum water content absorbed by the electrolyte at the moment $t$ in the low-temperature startup process, $\lambda(t)$ represents a present water content in the electrolyte at the moment $t$ in the low-temperature startup process, $J(t)$ represents a current density at the moment $t$, $F$ represents a Faraday constant, $q_{\mathrm{w}}^{\mathrm{net}}(t)$ represents a net flux of transmembrane water transferred from an anode to a cathode of the fuel cell at the moment $t$, $EW$ represents a molar mass of a proton exchange membrane, $\rho_{\mathrm{m}}$ represents a mass density of the proton exchange membrane, $\omega$ represents a volume fraction of the electrolyte in the catalyst layer, and $\delta_{\mathrm{CL}}$ represents a thickness of the catalyst layer.

5. The method of claim 1, wherein $\tau_{\mathrm{w}}^{\mathrm{ice}}(t)$ is calculated by:

$$\tau_{\mathrm{w}}^{\mathrm{ice}}(t) = \frac{\left[s_{\mathrm{ice}}^{\mathrm{limit}} - s_{\mathrm{ice}}(t)\right] \cdot \rho_{\mathrm{ice}} \varepsilon_{\mathrm{CL}} \delta_{\mathrm{CL}}}{\left[\dfrac{J(t)}{2F} + q_{\mathrm{w}}^{\mathrm{net}}(t)\right] \cdot M_{\mathrm{H_2O}}}$$

$$(4)$$

in which, $\rho_{ice}$ represents a mass density of ice, $\varepsilon_{CL}$ represents a porosity of the catalyst layer, $\delta_{CL}$ represents a thickness of the catalyst layer, $J(t)$ represents a current density at the moment $t$, $F$ represents a Faraday constant, $q_{w}^{net}(t)$ represents a net flux of transmembrane water transmitted from an anode to a cathode of the fuel cell at the moment t, $s_{ice}^{limit}$ represents the allowed ice volume fraction upper limit in the interior of the fuel cell, $s_{ice}(t)$ represents the ice volume fraction in the interior of the fuel cell at the moment t, and $M_{H2O}$ represents a molar mass of water.

6. The method of claim 2, wherein in the low-temperature startup process of the fuel cell, the temperature $T(t)$ at an initial moment is obtained as a temperature $T(0)$, $SF_0(t)$ at any moment $t$ in the startup process in which the fuel cell is heated and started from the temperature T(0) at the initial moment is calculated in combination with the formulas (1) and (2), to monitor a running state of the fuel cell in the low-temperature startup process in real time and to determine whether the fuel cell is started successfully when the fuel cell is started in the temperature T(0) at the initial moment.

7. The method of claim 2, wherein the current density $J(t)$ at the moment $t$ is calculated by:

$$J(t) = \frac{I(t)}{S} \tag{5},$$

in which, $I(t)$ represents a current at the moment $t$, and S represents an electrochemical active area of the fuel cell or a membrane electrode.

8. The method of claim 7, wherein in the low-temperature startup process of the fuel cell, the current of the fuel cell rises from 0A at the initial moment to an upper limit current and the fuel cell continuously runs at the upper limit current; the upper limit current is obtained, the low-temperature startup capability index $SF_0(t)$ at the moment t is calculated in combination with the formulas (1), (2) and (5), to determine whether a failure risk exists in the low-temperature startup process of the fuel cell at the upper limit current.

9. The method of claim 8, wherein in the low-temperature startup process of the fuel cell, a current loading speed $V$ is obtained and the current $I(t)$ at the moment t is calculated based on $I(t) = V \cdot t$, the low-temperature startup capability index $SF_0(t)$ at any moment $t$ is calculated in combination with the formulas (1), (2) and (5), to determine whether the failure risk exists in the low-temperature startup process of the fuel cell at the current loading speed.

obtaining a time period $\tau_T(t)$ required for heating the fuel cell from a present temperature $T(t)$ to a freezing point temperature $T_{fusion}$ in an interior of the fuel cell with a present heating rate at a moment $t$ in a low-temperature startup process of a proton exchange membrane fuel cell

$\downarrow$

obtaining a time period $\tau_w^{ab}(t) + \tau_w^{ice}(t)$ required for continuously freezing the interior of the fuel cell from a present ice volume fraction $S_{ice}(t)$ to an allowed ice volume fraction upper limit $s_{ice}^{limit}$ with a present freezing rate at the moment $t$

$\downarrow$

obtaining a low-temperature startup capability index $SF_0(t)$ of the fuel cell based on a ratio of $\tau_T(t)$ to $\tau_w^{ab}(t) + \tau_w^{ice}(t)$

$\downarrow$

increasing the present heating rate by adjusting a control strategy reasonably if $SF_0(t) > 1$, to decrease the time period $\tau_T(t)$ to accelerate a heating process and to obtain $SF_0(t) < 1$, thereby ensuring success of the low-temperature startup of the fuel cell, in which $SF_0(t) > 1$ indicates that a freezing process in the interior of the fuel cell is faster than the heating process at the moment t, which causes failure of the low-temperature startup of the fuel cell in case that the control strategy is not adjusted

FIG. 1

FIG. 2

FIG. 3

FIG. 4

## INTERNATIONAL SEARCH REPORT

| International application No. |
|---|
| **PCT/CN2022/089123** |

**A.    CLASSIFICATION OF SUBJECT MATTER**

H01M 8/04223(2016.01)i;  H01M 8/04225(2016.01)i;  H01M 8/04302(2016.01)i;  H01M 8/04313(2016.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ISI; CNKI: 燃料电池, 低温, 冷, 启动, 冰点, 结冰, 加热, 升温, 温度, 时间, 速度, 速率, fuel cell, cold, low temperature, start, start-up, ice, freez+, frozen, point, heat+, rate, time

**C.    DOCUMENTS CONSIDERED TO BE RELEVANT**

| Category* | Citation of document, with indication, where appropriate, of the relevant passages | Relevant to claim No. |
|---|---|---|
| PX | CN 113285097 A (SHANGHAI HYDROGEN PROPULSION TECHNOLOGY CO., LTD.) 20 August 2021 (2021-08-20) claims 1-9, and description, paragraphs [0006]-[0071] | 1-9 |
| A | CN 109921066 A (DALIAN INSTITUTE OF CHEMICAL PHYSICS, CHINESE ACADEMY OF SCIENCES) 21 June 2019 (2019-06-21) description, paragraphs [0005]-[0025] | 1-9 |
| A | US 2016372768 A1 (AUTOMOTIVE FUEL CELL COOPERATION CORP.) 22 December 2016 (2016-12-22) entire document | 1-9 |
| A | JP 2005044795 A (HONDA MOTOR CO., LTD.) 17 February 2005 (2005-02-17) entire document | 1-9 |
| A | CN 110774905 A (TOYOTA MOTOR CORPORATION) 11 February 2020 (2020-02-11) entire document | 1-9 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 June 2022** | **21 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br>**PCT/CN2022/089123**</td></tr>
</table>

| Patent document cited in search report | | | Publication date (day/month/year) | Patent family member(s) | | | Publication date (day/month/year) |
|---|---|---|---|---|---|---|---|
| CN | 113285097 | A | 20 August 2021 | CN | 113285097 | B | 23 November 2021 |
| CN | 109921066 | A | 21 June 2019 | | None | | |
| US | 2016372768 | A1 | 22 December 2016 | WO | 2016203307 | A2 | 22 December 2016 |
| | | | | WO | 2016203307 | A3 | 23 February 2017 |
| | | | | US | 10249890 | B2 | 02 April 2019 |
| JP | 2005044795 | A | 17 February 2005 | CA | 2473213 | A1 | 09 January 2005 |
| | | | | DE | 102004033169 | A1 | 17 February 2005 |
| | | | | JP | 2005044795 | A | 17 February 2005 |
| | | | | US | 2005053809 | A1 | 10 March 2005 |
| | | | | DE | 102004033169 | B4 | 08 January 2009 |
| | | | | US | 7588844 | B2 | 15 September 2009 |
| | | | | CA | 2473213 | C | 08 February 2011 |
| | | | | JP | 4996814 | B2 | 08 August 2012 |
| CN | 110774905 | A | 11 February 2020 | JP | 2020018084 | A | 30 January 2020 |
| | | | | US | 2020036023 | A1 | 30 January 2020 |
| | | | | DE | 102019116075 | A1 | 30 January 2020 |
| | | | | US | 11171349 | B2 | 09 November 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110524604